# EUROPEAN PATENT APPLICATION

(11) **EP 1 246 340 A1**
(43) Date of publication of application: **02.10.2002**
(21) Application number: 01107704.7
(22) Date of filing: 29.03.2001
(51) Int. Cl.: H02J 7/35

(54) **Solar-powered device for charging a battery unit of a mobile telephone handset**

(71) Applicant: Chen, I-Ming, Nei-Hu District, Taipei City (TW)
(72) Inventor: Chen, I-Ming, Nei-Hu District, Taipei City (TW)
(74) Representative: VOSSIUS & PARTNER

(57) **Abstract**

A solar-powered device (1) is adapted to be disposed on a battery unit of a mobile telephone handset so as to charge the battery unit (3). The solar-powered device includes a light sensor, a photoelectric converting circuit coupled operably to the light sensor so as to convert light that is sensed by the light sensor into a corresponding current signal, and a current processing circuit, coupled electrically to the photoelectric converting circuit, for receiving and processing the current signal so as to result in a charging current that is adapted to charge the battery unit of the mobile telephone handset.

## Description

The present invention relates to a battery charging device, more particularly to a solar-powered device for charging a battery unit of a mobile telephone handset.

With the miniaturization of mobile telephone handsets, the size of battery units for mobile telephone handsets has been reduced, which results in a reduction in the capacity of the battery units as well. Frequent recharging of battery units therefore becomes necessary. Even though there are available traveler's chargers that can be carried around quite conveniently, it is still necessary to connect such chargers to a power supply source. Therefore, some users prefer to carry spare battery units with them. However, there are reports that battery units carried in bags and exposed to other metal objects may lead to accidents.

Therefore, the main object of the present invention is to provide an improved device for charging a battery unit of a mobile telephone handset.

This object is achieved with the subject-matter according to the claims.

It is an advantage of the present invention to provide a solar-powered device for charging a battery unit of a mobile telephone handset.

According to one aspect of the present invention, a solar-powered device is adapted to be disposed on a battery unit of a mobile telephone handset so as to charge the battery unit. The solar-powered device includes: a light sensor; a photoelectric converting circuit coupled operably to the light sensor so as to convert light that is sensed by the light sensor into a corresponding current signal; and a current processing circuit, coupled electrically to the photoelectric converting circuit, for receiving and processing the current signal so as to result in a charging current that is adapted to charge the battery unit of the mobile telephone handset.

According to another aspect of the present invention, a battery unit for a mobile telephone handset includes a main battery body and a solar-powered device disposed on the main battery body. The solar-powered device includes a light sensor, a photoelectric converting circuit coupled operably to the light sensor so as to convert light that is sensed by the light sensor into a corresponding current signal, and a current processing circuit, coupled electrically to the photoelectric converting circuit, for receiving and processing the current signal so as to result in a charging current that is used to charge the main battery body.

According to a further aspect of the present invention, a solar-powered device is adapted to be disposed on an outer surface of a housing of a mobile telephone handset so as to charge a battery unit of the mobile telephone handset. The solar-powered device includes: a light sensor; a photoelectric converting circuit coupled operably to the light sensor so as to convert light that is sensed by the light sensor into a corresponding current signal; and a current processing circuit, coupled electrically to the photoelectric converting circuit, for receiving and processing the current signal so as to result in a charging current that is adapted to charge thebattery unit of the mobile telephone handset.

Other features and advantages of the present invention will become apparent in the following detailed description of the preferred embodiments with reference to the accompanying drawings, of which:
Figure 1 is a schematic partly exploded view of the preferred embodiment of a solar-powered device according to the present invention in a first preferred state of use;
Figure 2 is a schematic sectional view illustrating assembly of the preferred embodiment to a battery unit;
Figure 3 is a schematic block diagram of the preferred embodiment;
Figure 4 is a schematic view illustrating the preferred embodiment in a second preferred state of use;
Figure 5 is a schematic view illustrating the preferred embodiment in a third preferred state of use;
Figure 6 is a perspective view of another preferred embodiment of a solar-powered device according to the present invention;
Figure 7 is a schematic block diagram of the preferred embodiment of Figure 6; and
Figure 8 is a schematic side view of a modified cover plate of the preferred embodiments.

Before the present invention is described in greater detail, it should be noted that like elements are denoted by the same reference numerals throughout the disclosure.

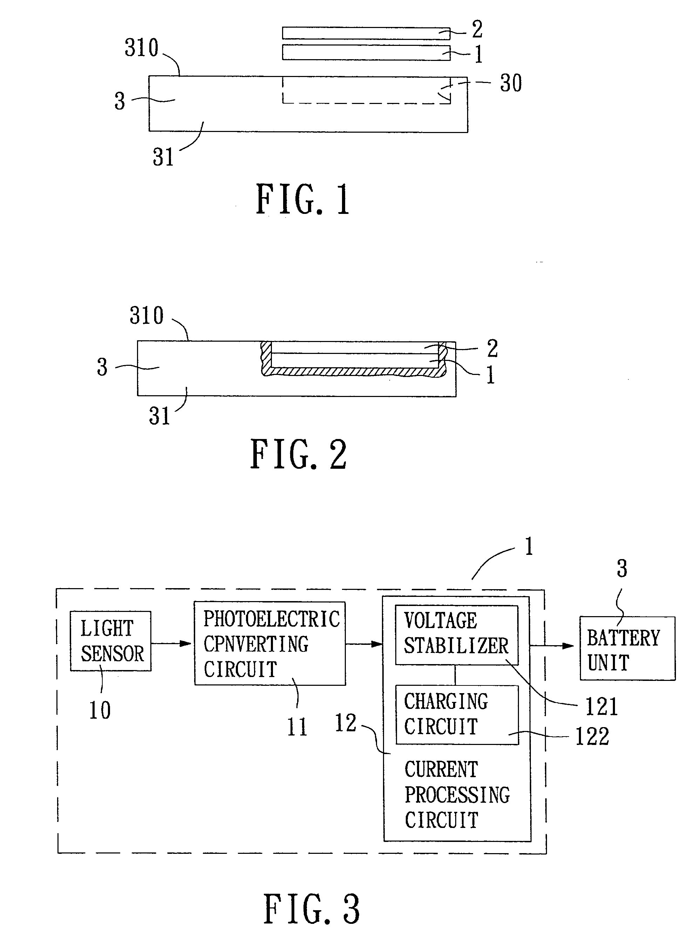

Referring to Figures 1 to 3, the preferred embodiment of a solar-powered device 1 of this invention is shown to include a light sensor 10, a photoelectric converting circuit 11 and a current processing circuit 12. In the first preferred state of use, the solar-powered device 1 is adapted to be disposed on a battery unit 3 of a mobile telephone handset (not shown). The battery unit 3 has a main battery body 31 that includes a housing having one surface 310, preferably the surface facing a battery cap of a housing of the mobile telephone handset, formed with a recess 30 to receive the solar-powered device 1 therein. The recess 30 may be alternatively formed on the other surface of the housing of the main battery body 31. In the latter case, the battery unit 3 has to be removed from the handset when charging is desired.

The light sensor 10 in this embodiment is a light sensor plate.

The photoelectric converting circuit 11 is coupled operably to the light sensor 10 so as to convert light that is sensed by the light sensor 10 into a corresponding current signal.

Referring to Figure 3, the current processing circuit 12 includes a voltage stabilizer 121 and a charging circuit 122 coupled to the voltage stabilizer 121. The current processing circuit 12 is coupled electrically to the photoelectric converting circuit 11 for receiving and processing the current signal so as to result in a charging current that is used to charge the main battery body 31 of the battery unit 3. In this embodiment, the current processing circuit 12 has an input end connected to the photoelectric converting circuit 11 and an output end for outputting the charging current to the battery unit 3. As to how the charging current is supplied to the battery unit 3, since it is known in the art and can be done in various ways, a detailed discussion thereof is dispensed with herein for the sake of brevity. The operation of both the voltage stabilizer 121 and the charging circuit 122 is likewise dispensed with herein.

It is noted that the light sensor 10, the photoelectric converting circuit 11 and the current processing circuit 12 can be integrated into a single module. Furthermore, the solar-powered device 1 may further include a transparent cover plate 2 that lies over the light sensor 10 for protection's sake.

By virtue of the aforesaid construction, when the user needs to charge the battery unit 3 of his mobile telephone handset, he can simply remove the battery cap of the housing of the handset to expose the battery unit 3 to a suitable light source, such as sunlight, so as to proceed with charging. There is no need to carry a battery charger or a spare battery unit.

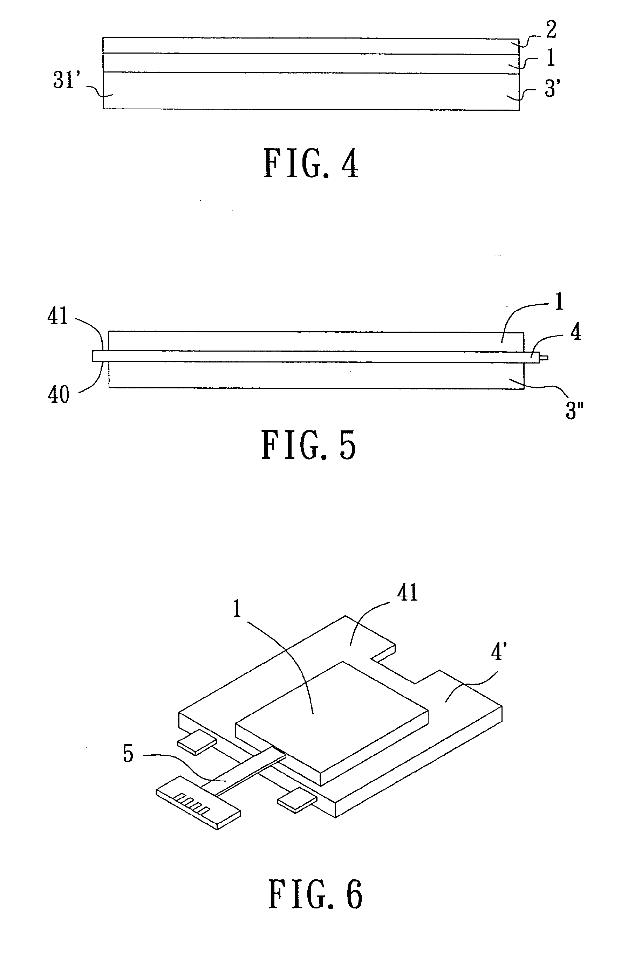

Figure 4 shows the solar-powered device 1 in the second preferred state of use. As shown, the housing of the main battery body 31' of the battery unit 3' is not formed with a recess, and the solar-powered device 1 is directly disposed on the housing of the main battery body 31' of the battery unit 3'.

Figure 5 shows the solar-powered device 1 in the third preferred state of use. As shown, the solar-powered device 1 is disposed on an outer surface 41 of a battery cap 4 of the housing of the mobile telephone handset (not shown), whereas the battery unit 3" is disposed on an inner surface 40 of the battery cap 4.

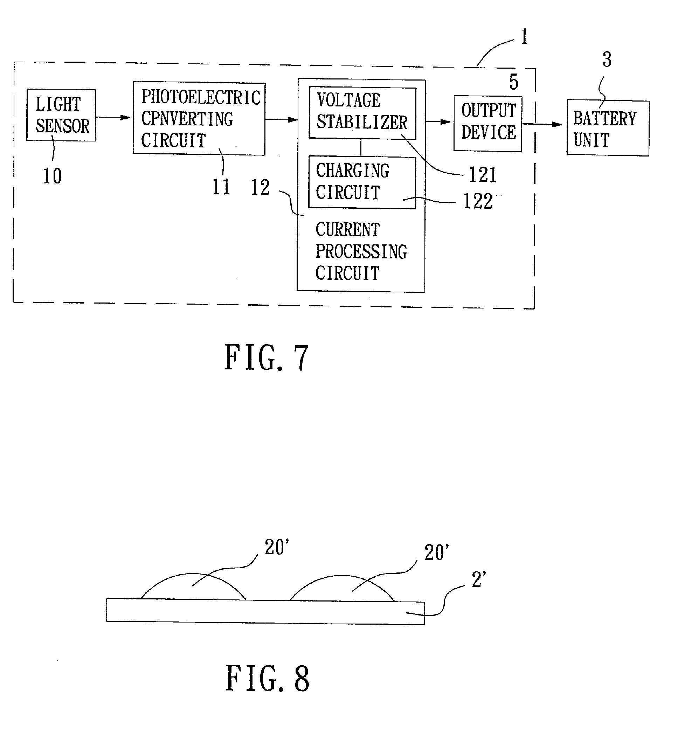

Figures 6 and 7 show another preferred embodiment of a solar-powered device 1 according to the present invention. In this embodiment, the solar-powered device 1 is mounted on the outer surface 41 of the battery cap 4' of the housing of the mobile telephone handset (not shown), and further includes an output device 5 coupled to the current processing circuit 12 and adapted to supply the charging current to the battery unit 3. The output device 5 is in the form of a connecting cable that is adapted to connect with a power supply socket (not shown) of the handset.

It is noted that the outer surface 41 of the battery cap 4, 4' in the embodiments shown in Figures 5 and 6 may be formed with a recess (not shown) similar to the recess 30 in the embodiment of Figure 1 for receiving the solar-powered device 1. On the other hand, the solar-powered device 1 may be adapted to be mounted on parts of the housing of the mobile telephone handset other than the battery cap 4, 4'.

With reference to Figure 8, for purposes of better light convergence, the cover plate 2' is formed with a light-controlling projecting portion 20'. In the embodiment of Figure 8, two projecting portions 20' are provided.

While the present invention has been described in connection with what is considered the most practical and preferred embodiments, it is understood that this invention is not limited to the disclosed embodiments but is intended to cover various arrangements included within the spirit and scope of the broadest interpretation so as to encompass all such modifications and equivalent arrangements.

## Claims

1. A solar-powered device adapted to be disposed on a battery unit of a mobile telephone handset so as to charge the battery unit, said solar-powered device comprising:
a light sensor;
a photoelectric converting circuit coupled operably to said light sensor so as to convert light that is sensed by said light sensor into a corresponding current signal; and
a current processing circuit, coupled electrically to said photoelectric converting circuit, for receiving and processing the current signal so as to result in a charging current that is adapted to charge the battery unit of the mobile telephone handset.

2. The solar-powered device of Claim 1, further comprising a transparent cover plate that lies over said light sensor.

3. The solar-powered device of Claim 2, wherein said cover plate is formed with a light-controlling projecting portion.

4. The solar-powered device of any one of Claims 1 to 3, wherein said current processing circuit includes a voltage stabilizer and a charging circuit coupled to said voltage stabilizer.

5. A battery unit for a mobile telephone handset, comprising:
a main battery body; and
a solar-powered device disposed on said main battery body and including
a light sensor,
a photoelectric converting circuit coupled operably to said light sensor so as to convert light that is sensed by said light sensor into a corresponding current signal, and
a current processing circuit, coupled electrically to said photoelectric converting circuit, for receiving and processing the current signal so as to result in a charging current that is used to charge said main battery body.

6. The battery unit of Claim 5, wherein said solar-powered device further includes a transparent cover plate that lies over said light sensor.

7. The battery unit of Claim 6, wherein said cover plate is formed with a light-controlling projecting portion.

8. The battery unit of any one of Claims 5 to 7, wherein said current processing circuit includes a voltage stabilizer and a charging circuit coupled to said voltage stabilizer.

9. The battery unit of any one of Claims 5 to 8, wherein said main battery body includes a housing having one surface formed with a recess to receive said solar-powered device therein.

10. A solar-powered device adapted to be disposed on an outer surface of a housing of a mobile telephone handset so as to charge a battery unit of the mobile telephone handset, said solar-powered device comprising:
a light sensor;
a photoelectric converting circuit coupled operably to said light sensor so as to convert light that is sensed by said light sensor into a corresponding current signal; and
a current processing circuit, coupled electrically to said photoelectric converting circuit, for receiving and processing the current signal so as to result in a charging current that is adapted to charge the battery unit of the mobile telephone handset.

11. The solar-powered device of Claim 10, further comprising a transparent cover plate that lies over said light sensor.

12. The solar-powered device of Claim 11, wherein said cover plate is formed with a light-controlling projecting portion.

13. The solar-powered device of any one of Claims 10 to 12, wherein said current processing circuit includes a voltage stabilizer and a charging circuit coupled to said voltage stabilizer.

14. The solar-powered device of any one of Claims 10 to 13, further comprising an output device coupled to said current processing circuit and adapted to supply the charging current to the battery unit.

15. The solar-powered device of Claim 14, wherein said output device includes a connecting cable adapted to connect with a power supply socket of the mobile telephone handset.
